# EUROPEAN PATENT SPECIFICATION

(11) **EP 2 700 692 B1**
(45) Date of publication and mention of the grant of the patent: **13.03.2019**
(21) Application number: 12831670.0
(22) Date of filing: 03.08.2012
(51) Int. Cl.: C09K 3/10, C08K 3/04, C08K 5/103, C08K 5/14, C08L 15/00, F04B 53/00, F04D 29/12, F16J 3/04, F16J 15/34

(54) **HYDROGENATED NITRILE RUBBER COMPOSITION**
HYDROGENIERTE NITRILKAUTSCHUKZUSAMMENSETZUNG
COMPOSITION DE CAOUTCHOUC NITRILE HYDROGÉNÉE

(30) Priority: 13.09.2011 JP 2011199558
(43) Date of publication of application: 26.02.2014
(73) Proprietor: Eagle Industry Co., Ltd., Minato-ku Tokyo 105-8587 (JP)
(72) Inventor: KOBAYASHI Osamu, Tokyo 105-8587 (JP); MURAKAMI Hideyuki, Tokyo 105-8587 (JP)
(74) Representative: Adam, Holger
(86) International application number: PCT/JP2012/069852
(87) International publication number: WO 2013/038835

(56) References cited:
- EP-A1- 0 558 385
- EP-A1- 0 795 580
- EP-A1- 1 538 178
- EP-A1- 1 591 481
- EP-A1- 1 808 458
- EP-A1- 2 703 650
- EP-A2- 2 065 438
- WO-A1-2006/009181
- CN-A- 1 789 314
- JP-A- 2002 080 639
- JP-A- 2006 131 700
- JP-A- 2006 213 743
- JP-A- 2009 085 338
- JP-A- 2011 122 105

## Description

### TECHNICAL FIELD

The present invention relates to a hydrogenated nitrile rubber composition. More particularly, the present invention relates to a hydrogenated nitrile rubber composition that can be suitably used as a vulcanization-molding material for cup gaskets or bellows of mechanical seals used in water pumps of radiators, etc., for automobiles and construction machinery.

### BACKGROUND ART

Water pumps are pumps in which an aqueous solution comprising ethyleneglycol, etc., as active ingredients is used as LLC (long life coolant), which is an antifreeze fluid. Water pump mechanical seals used to seal LLC are disclosed, for example, in Patent Document 1. Cup gaskets and bellows, which are used as members of the mechanical seals and which are static seals incapable of sliding, are made from rubber materials. Patent Document 1 refers to FKM (fluororubber), NBR, IIR, U (polyurethane rubber, such as AU and EU), Q (silicone rubber, such as VMQ and FVMQ), CR, and the like as usable examples of rubber materials for the cup gaskets.

These members are used to seal (secondary sealing) between sealing materials and members for fixing the sealing materials. For example, rubber materials itself used for lip seals are required to be hard because the rubber itself is a sliding body. Unlike such materials, rubber materials itself for the cup gaskets and bellows are required to be elastic enough to prevent the formation of gaps between the sealing members and the fixing members. More specifically, the rubber materials for these members are required elasticity having a hardness (Durometer A; according to JIS K6253 corresponding to ASTM D2240, Durometer Type A) of less than 70.

Since rubber materials generally used in mechanical seal members must have certain levels of hardness and elastic modulus so as to seal gaps between the members, the rubber materials are compounded with only small amounts of fillers, which have high reinforcing properties. Consequently, the volume fraction of the rubber polymer increases, and the desired resistance to LLC (long life coolant) is less likely to be ensured.

More specifically, the cup gaskets and bellows are required to have the following properties:
(1) Since mechanical seals are used under conditions in which they are always in contact with sealing liquid, such as LLC, in an atmosphere circumstances of high temperature (up to 160°C) and high pressure (up to 0.4 MPa), the cup gaskets or bellows, which are used as members of the mechanical seals, are required to have durability under such conditions. An improvement in LLC resistance is needed to enable the cup gaskets or bellows to sufficiently exhibit their performance.
(2) Flexible elastomeric materials, such as nitrile rubber, are used as vulcanization-molding materials for the cup gaskets and bellows, which are members of water pump mechanical seals. In order to ensure certain levels of hardness and elastic modulus, it is necessary to lessen the amounts of various fillers. Consequently, the volume fraction of the rubber polymer increases, and the desired LLC resistance cannot be ensured.
(3) If the LLC resistance of the cup gaskets and bellows is insufficient, swelling and softening cause destruction (rupture), thereby resulting in the leakage of a large amount of LLC. In the worst-case scenario, a breakdown caused by overheating occurs.
(4) In order to solve these problems, for example, Patent Documents 2 and 3 disclose (hydrogenated) nitrile rubber compositions comprising nitrile rubber or hydrogenated nitrile rubber, and magnesium hydroxide, without containing a zinc compound or calcined clay. In Examples of these documents, FEF carbon black is used as a filler; however, the use of FEF carbon black (particle size: 45 nm) results in inferior roll processability, as shown in the results of Comparative Example 1 to 3, described later. Among further prior art, Patent Document 6 discloses a hydrogenated nitrile rubber composition which can further contain 30-150 parts by weight of carbon black and/or 60 parts by weight or less of graphite. Furthermore, Patent Document 7 discloses a hydrogenated nitrile composition which comprises 100 parts by weight of hydrogenated nitrile rubber with a bound acrylonitrile content of not less than 30%, a polymer Mooney viscosity of not more than 80 and an iodine number of not more than 28, and 65 to 200 parts by weight of carbon fibers. Furthermore, EP 1 538 178 A1 discloses a hydrogenated nitrile rubber composition capable of providing a crosslinked product having a 20% modulus of 10 MPa or more and a thermal conductivity of 0.4 W/m·K or more at 25°C, which comprises 100 parts by weight of hydrogenated nitrile rubber having a bound acrylonitrile content of 40% or more, a polymer Mooney viscosity of 75 or less and an iodine value of 23 or less, and not less than 110 parts by weight in sum total as a filler consisting of carbon black and other gas shielding fillers CN1789314A discloses a rubber composition comprising 100 parts by weight (pbw) of HNBR, 4 pbw of DCP (dicumyl peroxide), 70+30 pbw of 2 different carbon blacks and 10 pbw of SR350 (a polyfunctional group reactive monomer).

### PRIOR ART DOCUMENT

### PATENT DOCUMENT

Patent Document 1 : JP-A-2005-265075
Patent Document 2 : JP-A-2001-354806
Patent Document 3 : JP-B-3676338
Patent Document 4 : JP-A-2006-131700
Patent Document 5 : JP-A-2002-80639
Patent Document 6 : EP 1 808 458 A1
Patent Document 7 : EP 1 591 481 A1
Patent Document 8 : EP 1 538 178 A1

### OUTLINE OF THE INVENTION

### PROBLEM TO BE SOLVED BY THE INVENTION

An object of the present invention is to provide a hydrogenated nitrile rubber composition that has excellent roll processability and can be suitably used as a vulcanization-molding material for a cup gasket or bellows having excellent LLC resistance used in a water pump mechanical seal.

### MEANS FOR SOLVING THE PROBLEM

The above object of the present invention can be achieved by a hydrogenated nitrile rubber composition according to claim 1. This hydrogenated nitrile rubber composition is free of a plasticizer.

### EFFECT OF THE INVENTION

The hydrogenated nitrile rubber composition of the present invention has excellent roll processability, and can be crosslinked with peroxide to form a cup gasket or bellows having excellent LLC resistance used for a water pump mechanical seal.

### EMBODIMENTS FOR CARRYING OUT THE INVENTION

The hydrogenated nitrile rubber used in the present invention has a bound acrylonitrile [AN] content of 31 to 50%, preferably 35 to 50%, and an iodine value of 30 mg/100 mg or less. The use of hydrogenated nitrile rubber in which the bound AN content and iodine value are outside the above range results in inferior LLC resistance.

The hydrogenated nitrile rubber having such properties is compounded in an amount of 100 parts by weight with carbon black having a particle size of 61 nm or more and/or the other filler according to claim 1 in an amount of 30 to 300 parts by weight, preferably 40 to 160 parts by weight. When the proportion of carbon black and/or other filler is less than this range, LLC resistance is insufficient; whereas when the proportion is greater than this range, roll processability is inferior.

The carbon black has a particle size (according to ASTM D1765) of 61 nm or more, preferably 61 to 500 nm. The use of carbon black having a particle size less than this range results in inferior roll processability. Moreover, examples of the filler other than the carbon black include silica, graphite, clay, talc, coke, calcium carbonate, alumina, silicon carbide, titanium oxide; preferably, at least one of graphite, silica, clay, etc., is used. The particle size of the other filler is not particularly limited, but is generally about 0.5 to 250 µm.

Since the use of a specific amount of such a filler can produce a rubber material having certain levels of hardness and elastic modulus and can reduce the volume fraction of the rubber polymer, the resulting rubber material has excellent LLC resistance. In general, a plasticizer is compounded to control hardness; however, the plasticizer is extracted at the time of use, consequently leading to changes in physical properties, such as hardness increase. Therefore, a plasticizer is not used in the hydrogenated nitrile rubber composition of the present invention.

When any of these various other fillers, particularly silica, is used, it is preferable to use it in combination with a coupling agent, such as a silane-, titanium-, zirconium-, or aluminum-based coupling agent, in an amount of 8 parts by weight or less, preferably 5 parts by weight or less, based on 100 parts by weight of the hydrogenated nitrile rubber.

Examples of silane-based coupling agents include vinyl group-, epoxy group-, and amino group-containing silane coupling agents, such as vinyltrichlorosilane, vinyltrimetoxysilane, vinyltriethoxysilane, 2-(3,4-epoxycyclohexyl)ethyltrimethoxysilane, 3-glycidoxypropyltrimetoxysilane, 3-glycidoxypropylmethyldiethoxysilane, N-2-(aminoethyl)-3-aminopropylmethyldimethoxysilane, 3-aminopropyltrimethoxysilane, and N-phenyl-3-aminopropyltrimethoxysilane.

Examples of titanium-based coupling agents include titanium diisopropoxy bis(triethanolaminato), titanium lactate ammonium salt, titanium lactate, titanium dioctyloxy bis(octyleneglycolate), and the like.

Examples of zirconium-based coupling agents include zirconium tetra-n-butoxide, zirconium tetraacetylacetonate, zirconium tributoxy monoacetylacetonate, zirconium monobutoxy acetylacetonate bis(ethylacetoacetate), zirconium butoxy bis(ethylacetoacetate), zirconium tetraacetylacetonate, zirconium tributoxy monostearate, and the like.

Moreover, examples of aluminum-based coupling agents include acetoalkoxy aluminum diisopropylate, and the like.

Examples of the organic peroxide include di-t-butyl peroxide, dicumyl peroxide, t-butylcumyl peroxide, 1,1-di(t-butylperoxy)-3,3,5-trimethylcyclohexane, 2,5-dimethyl-2,5-di(t-butylperoxy)hexane, 2,5-dimethyl-2,5-di(t-butylperoxy)hexyne-3, 1,3-di(t-butylperoxyisopropyl)benzene, 2,5-dimethyl-2,5-di(benzoylperoxy)hexane, t-butylperoxy benzoate, t-butylperoxy isopropyl carbonate, n-butyl-4,4'-di(t-butylperoxy) valerate, and the like. The proportion of organic peroxide is about 1 to 10 parts by weight, preferably about 2 to 8 parts by weight, based on 100 parts by weight of the hydrogenated nitrile rubber. When the amount of organic peroxide is less than this range, the resulting vulcanizate has an insufficient crosslinking density. In contrast, when the amount is greater than this range, foaming occurs, and vulcanization-molding cannot be performed; or, if vulcanization-molding can be performed, rubber elasticity and elongation decrease.

Furthermore, preferred examples of the polyfunctional unsaturated compound cocrosslinking agent include difunctional or trifunctional (meth)acrylates, such as ethyleneglycol dimethacrylate, triethyleneglycol dimethacrylate, 1,4-butyleneglycol dimethacrylate, 1,6-hexanediol dimethacrylate, and trimethylolpropane trimethacrylate. Other usable examples are triallyl isocyanurate, triallyl cyanurate, triallyl trimellitate, diallyl isocyanurate, and other allyl-based cocrosslinking agents that are generally used in combination with organic peroxides. The term "(meth)acrylate" as used herein refers to acrylate or methacrylate.

The proportion of polyfunctional unsaturated compound cocrosslinking agent is 0.5 to 30 parts by weight, preferably 1 to 10 parts by weight, based on 100 parts by weight of the hydrogenated nitrile rubber. When the proportion is less than this range, the desired LLC resistance (degree of swelling and degree of softening) targeted by the present invention cannot be achieved. As a result, a cup gasket or bellows of a water pump mechanical seal having the desired properties cannot be obtained. In contrast, when the proportion is greater than this range, rubber elasticity and elongation decrease.

Patent Document 4, which discloses an invention made by the present applicant, discloses a hydrogenated nitrile rubber composition comprising 100 parts by weight of hydrogenated nitrile rubber having a Mooney viscosity ML₁₊₄ (100°C) of 100 or less, an acrylonitrile content of 30 to 50%, and an iodine value of 28 or less, 60 to 250 parts by weight of carbon fiber, and 12 to 70 parts by weight of a polyfunctional group-based cocrosslinking agent having a molecular weight of 150 to 500 and a viscosity (20°C) of 3 to 120 mPa·s. A sealing material formed from the hydrogenated nitrile rubber composition by vulcanization-molding is described to be suitable for sealing liquid, such as an aqueous solution mainly comprising water (e.g., LLC).

In this case, according to Patent Document 4, since carbon fiber is used as one component of the composition, the use of less than 12 parts by weight of a polyfunctional group-based cocrosslinking agent does not result in improvements in kneading properties and molding processability, or improvements in reinforcing effect and extraction resistance to various fluids. Conversely, the present invention effectively improves LLC resistance and roll processability, even though the proportion of polyfunctional unsaturated compound is in the range of 1 to 10 parts by weight.

In addition, Patent Document 5, which has one common inventor of the present coinventors, discloses a hydrogenated nitrile rubber composition comprising 100 parts by weight of hydrogenated nitrile rubber having a bound acrylonitrile content of 38% or less, a degree of hydrogenation of 90% or more, and an iodine value (central value) of 28 or less, and 120 parts by weight or more in total of carbon black and other fillers. The hydrogenated nitrile rubber composition provides a crosslinking product having a thermal conductivity at 20°C of 0.4 W/m·k or more and a 50% modulus of 14 MPa or more. Patent Document 5 also indicates that when an organic peroxide is used, a polyfunctional unsaturated compound is preferably used in combination.

Example 4 of Patent Document 5 uses a hydrogenated nitrile rubber composition comprising hydrogenated NBR (AN content: 36.2%, degree of hydrogenation: 96%, iodine value: 11), SRF carbon black, silica, graphite, PTFE powder, a silane coupling agent, an antioxidant, and an organic peroxide; however, no polyfunctional unsaturated compound is used. The same applies to other Examples.

The preparation of the composition is carried out by suitably compounding, in addition to the above essential components, processing aids, such as stearic acid, palmitic acid, and paraffin wax; acid acceptors, such as zinc oxide, magnesium oxide, and hydrotalcite; antioxidants; and various other fillers (except for plasticizers) generally used in the rubber industry, by using an open roll or a kneading machine such as intermix, kneader, or Banbury mixer. Vulcanization of the kneaded compound is generally carried out by heating at about 150 to 200°C for about 3 to 60 minutes using an injection molding machine, compression molding machine, vulcanizing press, or the like, optionally followed by oven vulcanization (secondary vulcanization) by heating at about 120 to 200°C for about 1 to 24 hours. Thus, the kneaded compound is vulcanization-molded into the desired product, i.e., a cup gasket or bellows for a water pump mechanical seal.

### EXAMPLES

The following describes certain embodiments not belonging to the present invention with reference to Examples.

### Example 1 (reference)

| | |
|---|---|
| Hydrogenated nitrile rubber (Zetpol 2011, produced by Zeon Corporation; bound AN content: 36%, iodine value: 18 mg/100 mg) [HNBR-A] | 100 parts by weight |
| Carbon black (Sevacarb MT, produced by Columbia Carbon Co., Ltd.; particle size: 350 nm) [MT carbon] | 150 parts by weight |
| Polyfunctional unsaturated compound cocrosslinking agent (Acryester ED, produced by Mitsubishi Rayon Co., Ltd.; ethyleneglycol dimethacrylate) | 6 parts by weight |
| Antioxidant (Antage 6C, produced by Kawaguchi Chemical Industry Co., Ltd.; N-1,3-dimethylbutyl-N'-phenyl-p-phenylenediamine) | 3 parts by weight |
| Organic peroxide (Perbutyl P, produced by NOF Corporation; α,α'-di(t-butylperoxy)diisopropylbenzene) | 3 parts by weight |

The above components were kneaded by a 3L kneader and a 10-inch roll, and the knead compound was compression-molded at 180°C for 10 minutes, thereby forming a rubber sheet (thickness: 2 mm).

The knead compound and rubber sheet were tested for the following items.
LLC resistance: The degree of swelling and the degree of softening were evaluated after dipping in an aqueous solution of 30 volume% organic acid-based LLC at 120°C at atmospheric pressure (natural pressure increase) for 2,000 hours
(Degree of swelling) The volume change before and after dipping (measured according to JIS K6258 corresponding to ASTM D471) was evaluated as follows: less than +10%: ⊚; +10 to +20%: ○; and greater than +20%: ×
   (Those evaluated as ⊚ and ○ are usable, while those evaluated as × are unusable)
(Degree of softening) The hardness change before and after dipping (IRHD; measured according to JIS K6253 corresponding to ASTM D1415) was evaluated as follows: less than -15 points: ⊚; -15 to -25 points: ○; and greater than -25 points: × (
   Those evaluated as ⊚ and ○ are usable, while those evaluated as × are unusable)
Roll processability: The roll processability was evaluated as follows: when there was no defect, such as bagging (a phenomena occurring during kneading by a rolling mill in which the rubber passing through the roll gap loosened to upper space from the roll), during roll processing: ○; and when roll processing could not be performed: ×

### Examples 2 and 3 (reference)

In Example 1, the amount of MT carbon black was changed to 30 parts by weight or 300 parts by weight.

### Example 4 (reference)

In Example 1, the same amount of SRF carbon black (Asahi #55, produced by Asahi Carbon Co., Ltd.; particle size: 66 nm) was used in place of MT carbon black.

### Examples 5 and 6 (reference)

In Example 4, the amount of SRF carbon black was changed to 30 parts by weight or 300 parts by weight.

### Example 7 (reference)

In Example 1, the same amount of silica (Silica 100F, produced by Chuo Silika Co., Ltd.; particle size: 8 µm) was used in place of MT carbon black.

### Examples 8 and 9 (reference)

In Example 7, the amount of silica (Silica 100F) was changed to 30 parts by weight or 300 parts by weight.

### Example 10 (reference)

In Example 7, 5 parts by weight of a silane-based coupling agent (KBM-602, produced by Shin-Etsu Chemical Co., Ltd.; N-2-(aminoethyl)-3-aminopropylmethyldimethoxysilane) was used in combination with silica (Silica 100F).

### Examples 11 and 12 (reference)

In Example 10, the amount of silica (Silica 100F) was changed to 30 parts by weight or 300 parts by weight.

### Example 13 (reference)

In Example 1, the same amount of graphite (Graphite G-30, produced by Chuetsu Graphite Works Co., Ltd.; particle size: 210 µm) was used in place of MT carbon black.

### Example 14 (reference)

In Example 1, the same amount of clay (Kaocal, produced by Shiraishi Calcium Kaisha, Ltd.; particle size: 0.9 µm) was used in place of MT carbon black.

### Example 15 (reference)

In Example 1, the amount of MT carbon black was changed to 75 parts by weight, and 75 parts by weight of silica (Silica 100F) was further used.

### Example 16 (reference)

In Example 1, the amount of MT carbon black was changed to 15 parts by weight, and 15 parts by weight of silica (Silica 100F) was further used.

### Example 17 (reference)

In Example 1, 150 parts by weight of silica (Silica 100F) was further used.

### Example 18 (reference)

In Example 15, the same amounts of MT carbon black and silica (Silica 100F) were used in combination with 5 parts by weight of a silane-based coupling agent (KBM-602).

### Example 19 (reference)

In Example 16, the same amounts of MT carbon black and silica (Silica 100F) were used in combination with 5 parts by weight of a silane coupling agent (KBM-602).

### Example 20 (reference)

In Example 17, the same amounts of MT carbon black and silica (Silica 100F) were used in combination with 5 parts by weight of a silane coupling agent (KBM-602).

### Example 21 (reference)

In Example 1, the hydrogenated nitrile rubber was changed to the same amount of Zetpol 0020 (produced by Zeon Corporation; bound AN content: 49.2%, iodine value: 23 mg/100 mg) [HNBR-B].

### Example 22 (reference)

In Example 1, the hydrogenated nitrile rubber was changed to the same amount of Zetpol 2020 (produced by Zeon Corporation; bound AN content: 36%, iodine value: 28 mg/100 mg) [HNBR-C].

### Example 23 (reference)

In Example 1, the amount of cocrosslinking agent was changed to 1 part by weight.

### Example 24 (reference)

In Example 1, the amount of cocrosslinking agent was changed to 30 parts by weight.

### Comparative Example 1

In Example 1, the same amount of FEF carbon black (#60, produced by Asahi Carbon Co., Ltd.; particle size: 45 nm) was used in place of MT carbon black.

### Comparative Examples 2 and 3

In Comparative Example 1, the amount of FEF carbon black was changed to 30 parts by weight or 300 parts by weight.

### Comparative Examples 4 and 5

In Example 1, the amount of MT carbon black was changed to 20 parts by weight or 310 parts by weight.

### Comparative Examples 6 and 7

In Example 7, the amount of silica (Silica 100F) was changed to 20 parts by weight or 310 parts by weight.

### Comparative Example 8

In Example 15, the amount of MT carbon black was changed to 10 parts by weight, and the amount of silica (Silica 100F) was changed to 10 parts by weight.

### Comparative Example 9

In Example 15, the amount of MT carbon black was changed to 160 parts by weight, and the amount of silica (Silica 100F) was changed to 160 parts by weight.

### Comparative Example 10

In Example 1, no cocrosslinking agent was used.

### Comparative Example 11

In Example 1, the amount of cocrosslinking agent was changed to 35 parts by weight.

### Comparative Example 12

In Example 1, the hydrogenated nitrile rubber was changed to the same amount of Zetpol 3110 (produced by Zeon Corporation; bound AN content: 25%, iodine value: 15 mg/100 mg) [HNBR-D].

### Comparative Example 13

In Example 1, the hydrogenated nitrile rubber was changed to the same amount of Zetpol 2030L (produced by Zeon Corporation; bound AN content: 36%, iodine value: 57 mg/100 mg) [HNBR-E].

Tables 1 to 4 below show the results obtained in the above Examples and Comparative Examples, together with the amount of each composition component (unit: part by weight), other than the common components (i.e., antioxidant and organic peroxide).

**Table 1**

| | Example | | | | | | | | | |
|---|---|---|---|---|---|---|---|---|---|---|
| | 1 | 2 | 3 | 4 | 5 | 6 | 7 | 8 | 9 | 10 |
| [Composition component] | | | | | | | | | | |
| HNBR-A | 100 | 100 | 100 | 100 | 100 | 100 | 100 | 100 | 100 | 100 |
| MT carbon black | 150 | 30 | 300 | | | | | | | |
| SRF carbon black | | | | 150 | 30 | 300 | | | | |
| Silica | | | | | | | 150 | 30 | 300 | 150 |
| Coupling agent | | | | | | | | | | 5 |
| Cocrosslinking agent | 6 | 6 | 6 | 6 | 6 | 6 | 6 | 6 | 6 | 6 |

| [Evaluation results] | | | | | | | | | | |
|---|---|---|---|---|---|---|---|---|---|---|
| LLC resistance | | | | | | | | | | |
| Swelling degree | ⊚ | ○ | ⊚ | ⊚ | ○ | ⊚ | ⊚ | ○ | ⊚ | ⊚ |
| Softening degree | ⊚ | ○ | ⊚ | ⊚ | ○ | ⊚ | ⊚ | ○ | ⊚ | ⊚ |
| Roll processability | ○ | ○ | ○ | ○ | ○ | ○ | ○ | ○ | ○ | ○ |

**Table 2**

| | Example | | | | | | | | | |
|---|---|---|---|---|---|---|---|---|---|---|
| | 11 | 12 | 13 | 14 | 15 | 16 | 17 | 18 | 19 | 20 |
| [Composition component] | | | | | | | | | | |
| HNBR-A | 100 | 100 | 100 | 100 | 100 | 100 | 100 | 100 | 100 | 100 |
| MT carbon black | | | | | 75 | 15 | 150 | 75 | 15 | 150 |
| Silica | 30 | 300 | | | 75 | 15 | 150 | 75 | 15 | 150 |
| Graphite | | | 150 | | | | | | | |
| Clay | | | | 150 | | | | | | |
| Coupling agent | 5 | 5 | | | | | | 5 | 5 | 5 |
| Cocrosslinking agent | 6 | 6 | 6 | 6 | 6 | 6 | 6 | 6 | 6 | 6 |

| [Evaluation results] | | | | | | | | | | |
|---|---|---|---|---|---|---|---|---|---|---|
| LLC resistance | | | | | | | | | | |
| Swelling degree | ⊚ | ⊚ | ⊚ | ⊚ | ⊚ | ○ | ⊚ | ⊚ | ⊚ | ⊚ |
| Softening degree | ⊚ | ⊚ | ⊚ | ⊚ | ⊚ | ○ | ⊚ | ⊚ | ⊚ | ⊚ |
| Roll processability | ○ | ○ | ○ | ○ | ○ | ○ | ○ | ○ | ○ | ○ |

**Table 3**

| | Example | | | | Comparative Example | | | | | |
|---|---|---|---|---|---|---|---|---|---|---|
| | 21 | 22 | 23 | 24 | 1 | 2 | 3 | 4 | 5 | 6 |
| [Composition component] | | | | | | | | | | |
| HNBR-A | | | 100 | 100 | 100 | 100 | 100 | 100 | 100 | 100 |
| HNBR-B | 100 | | | | | | | | | |
| HNBR-C | | 100 | | | | | | | | |
| MT carbon black | 150 | 150 | 150 | 150 | | | | 20 | 310 | |
| FEF carbon black | | | | | 150 | 30 | 300 | | | |
| Silica | | | | | | | | | | 20 |
| Cocrosslinking agent | 6 | 6 | 1 | 30 | 6 | 6 | 6 | 6 | 6 | 6 |

| [Evaluation results] | | | | | | | | | | |
|---|---|---|---|---|---|---|---|---|---|---|
| LLC resistance | | | | | | | | | | |
| Swelling degree | ⊚ | ⊚ | ○ | ⊚ | ⊚ | ○ | ⊚ | × | ⊚ | × |
| Softening degree | ⊚ | ⊚ | ○ | ⊚ | ⊚ | ○ | ⊚ | × | ⊚ | × |
| Roll processability | ○ | ○ | ○ | ○ | × | × | × | ○ | × | ○ |

**Table 4**

| | Comparative Example | | | | | | |
|---|---|---|---|---|---|---|---|
| | 7 | 8 | 9 | 10 | 11 | 12 | 13 |
| [Composition component] | | | | | | | |
| HNBR-A | 100 | 100 | 100 | 100 | 100 | | |
| HNBR-D | | | | | | 100 | |
| HNBR-E | | | | | | | 100 |
| MT carbon black | | 10 | 160 | 150 | 150 | 150 | 150 |
| Silica | 310 | 10 | 160 | | | | |
| Cocrosslinking agent | 6 | 6 | 6 | 0 | 35 | 6 | 6 |

| [Evaluation results] | | | | | | | |
|---|---|---|---|---|---|---|---|
| LLC resistance | | | | | | | |
| Swelling degree | ⊚ | × | ⊚ | × | ⊚ | × | × |
| Softening degree | ⊚ | × | ⊚ | × | ⊚ | × | × |
| Roll processability | × | ⊚ | × | ○ | × | ○ | ○ |

The above results indicate the following:
(1) When 30 to 300 parts by weight of MT carbon or SRF carbon, and 1 to 30 parts by weight of a cocrosslinking agent are used based on 100 parts by weight of hydrogenated nitrile rubber having a bound AN content of 31 to 50% and an iodine value of 30 mg/100 mg or less, LLC resistance is excellent, and no problem is found in roll processability.
   The same effects are also obtained when 30 to 300 parts by weight of silica and 0 to 5 parts by weight of a silane coupling agent are used, or when 30 to 300 parts by weight in total of MT carbon and silica, and 0 to 5 parts by weight of a silane coupling agent are used.
(2) When the hydrogenated nitrile rubber used has a bound AN content less than the specified value and an iodine value greater than the specified value, sufficient LLC resistance is not obtained.
(3) When the amount of MT carbon and/or silica is less than the specified value, sufficient LLC resistance is not obtained; whereas when the amount is greater than the specified value, kneading properties are problematic, and a rubber material is not obtained.
(4) When the amount of cocrosslinking agent was less than the specified value, LLC resistance and roll processability were both problematic.

## Claims

1. A hydrogenated nitrile rubber composition used as a vulcanization-molding material for a cup gasket or bellows which is a static seal of a water pump mechanical seal, which composition provides a static sealing material having a durometer A hardness of less than 70, the composition consisting of:
100 parts by weight of hydrogenated nitrile rubber having a bound acrylonitrile content of 31 to 50% and an iodine value of 30 mg/100 mg or less;
30 to 300 parts by weight of carbon black having a particle size, as measured according to ASTM D1765, of 61 nm or more and/or other filler, wherein the other filler is one member selected from the group consisting of silica, graphite, clay, talc, coke, calcium carbonate, alumina, silicon carbide, and titanium oxide;
0.5 to 30 parts by weight of a polyfunctional unsaturated compound cocrosslinking agent; and
1 to 10 parts by weight of an organic peroxide.

2. The hydrogenated nitrile rubber composition according to claim 1, which is free of a plasticizer.

## Patentansprüche

1. Hydrierte Kautschukzusammensetzung, die als Vulkanisationsformungsmaterial für eine Napfdichtung oder einen Balg, die/der eine statische Dichtung einer mechanischen Wasserpumpendichtung ist, verwendet wird, wobei die Zusammensetzung ein statisches Dichtungsmaterial bereitstellt, das eine Durometer-A-Härte von weniger als 70 hat, wobei die Zusammensetzung aus:
100 Gewichtsteilen hydrierter Nitrilkautschuk mit einem Gehalt an gebundenem Acrylnitril von 31 bis 50% und einer Iodzahl von 30 mg/100 mg oder weniger;
30 bis 300 Gewichtsteilen Ruß, der eine Partikelgröße, die gemäß ASTM D1765 gemessen wird, von 61 nm oder mehr hat, und/oder anderer Füllstoff, wobei der andere Füllstoff ein Mitglied, ausgewählt aus der Gruppe, bestehend aus Siliciumdioxid, Graphit, Ton, Talk, Koks, Calciumcarbonat, Aluminiumoxid, Siliciumcarbid und Titanoxid, ist;
0,5 bis 30 Gewichtsteilen einer polyfunktionellen ungesättigten Verbindung als Co-Vemetzungsmittel; und
1 bis 10 Gewichtsteilen eines organischen Peroxids besteht.

2. Hydrierte Nitrilkautschukzusammensetzung gemäß Anspruch 1, die frei von einem Weichmacher ist.

## Revendications

1. Composition de caoutchouc nitrile hydrogéné utilisée en tant que matériau de vulcanisation-moulage pour un joint d'étanchéité à rotule ou des soufflets étant une étanchéité statique d'une garniture mécanique d'une pompe à eau, dans laquelle la composition fournit un matériau d'étanchéité statique ayant une dureté à duromètre A inférieure à 70, la composition est constituée de:
100 parties en poids de caoutchouc nitrile hydrogéné ayant une teneur en acrylonitrile liée de 31 à 50% et un indice d'iode de 30 mg / 100 mg ou moins;
30 à 300 parties en poids de noir de carbone ayant une taille des particules, mesurée selon ASTM D 1765, de 61 nm ou plus, et/ou d'une autre charge, dans laquelle l'autre charge est un membre choisi parmi le groupe constitué de silice, graphite, argile, coke, carbonate de calcium, alumine, carbure de silicium et oxyde de titane;
0,5 à 30 parties en poids d'un composé insaturé polyfonctionnel en tant qu'agent de co-réticulation, et
1 à 10 parties en poids d'un peroxyde organique.

2. Composition de caoutchouc nitrile hydrogéné selon la revendication 1, qui est exempte de plastifiant.
